# EUROPEAN PATENT SPECIFICATION

(11) **EP 3 251 308 B1**
(45) Date of publication and mention of the grant of the patent: **06.01.2021**
(21) Application number: 15701781.5
(22) Date of filing: 29.01.2015
(51) Int. Cl.: H04L 12/721, H04L 12/26

(54) **FASTER LINK LAYER DISCOVERY PROTOCOL UPDATES**
SCHNELLERE VERBINDUNGSSCHICHTERKENNUNGSPROTOKOLLAKTUALISIERUNGEN
MISES À JOUR PLUS RAPIDES DE PROTOCOLES DE DÉCOUVERTE DE COUCHES DE LIAISON

(43) Date of publication of application: 06.12.2017
(73) Proprietor: Robert Bosch GmbH, 70442 Stuttgart (DE)
(72) Inventor: SMAAK, Marc, NL-4614 JR Bergen op Zoom (NL); DE BROUWER, Tom, NL-4812 XG Breda (NL); VAN TIENEN, Stephan, NL-4615 CA Bergen op Zoom (NL)
(86) International application number: PCT/EP2015/051766
(87) International publication number: WO 2016/119846

(56) References cited:
- EP-A1- 2 182 674
- "IEEE Standard for Local and metropolitan area networks Station and Media Access Control Connectivity Discovery;IEEE Std 802.1AB-2005 ED - Anonymous", IEEE STANDARD; [IEEE STANDARD], IEEE, PISCATAWAY, NJ, USA, 1 January 2005 (2005-01-01), pages _1-158, XP017601985, ISBN: 978-0-7381-4687-4

## Description

### Technical field

The invention provides for a method for running a computer network with network ports running the LLDP protocol and comprising a remote MIB. Furthermore, the invention provides for such a computer network.

### Background art

Especially in high performance low-latency Ethernet audio networks the physical network layout matters since this influences the ability to reliably synchronize audio clocks and to deliver audio from end-point to end-point in time.

"IEEE Standards 802.1AB, IEEE Standard for Local and metropolitan area networks, Station and Medi Access Control Connectivity Discovery, IEEE Computer Society, IEEE, New York, 6 May 2005" specifies a "Link Layer Discovery Protocol" (LLDP).

Layer 2 Ethernet protocols like "Link Layer Discovery Protocol" (LLDP) discover neighbors of any node in the network. Combining this information from different nodes can show the physical network topology, e.g. the physical network layout.

In a conventional network, once the physical network is being adapted the remote system MIBs of the devices for which the network has been changed will still report 'incorrect' data for some time. Working with this incorrect data will lead to incorrect conclusions and will confuse users of the data.

### Disclosure of the invention

According to the invention, a method according to claim 1 is for running a computer network, especially an Ethernet network, comprising a number of devices which have support for the Link Layer Discovery Protocol (LLDP protocol), being connected. The remote systems Management Information Base (remote MIB) may be queried to have an overview of the neighbor of each device. The invention provides also a computer network per claim 5. Dependent claims disclose preferred embodiments of the invention.

Each of the devices comprises at least one network port. The devices are interconnected within the network by network links, each link connecting two respective ports. Each of the network ports is running the LLDP protocol and comprises a remote MIB.

A change of a physical state of a network link triggers an update of the information in the remote MIB of the ports associated with this link. The update is triggered - and especially run and completed - especially immediately after the change of the physical state.

Link states especially are "up" - a physical connected network connection over the link exists - or "down" - no working network connection over the link exists.

The invention is based on the following considerations:
A computer network is a collection of computer and other components interconnected by communication channels. These channels allow for sharing of resource and information. Computer network can be classified according to a variety of characteristics as the medium used, communication protocols, scale, topology, and organization scope.

Ethernet networks are frame-based computer networks for local area networks. It is to be noted that Ethernet networks performance is based on many different factors. The most important factor is the physical layout of the computer network.

Especially in high performance low-latency Ethernet audio networks the physical network layout matters since this influences the ability to reliably synchronize audio clocks and to deliver audio from end-point to end-point in time.

Layer 2 protocols are developed to discover neighbors of any node in the network. Proprietary protocols and protocols as standard exist, for example the "Link Layer Discovery Protocol" (LLDP). Combining this information from different nodes can show the physical network topology, e.g. the physical network layout.

The LLDP is a vendor neutral network protocol that allows nodes attached to an IEEE 802 LAN to advertise, to other nodes attached to the same IEEE 802 LAN, its presence and major capabilities.

LLDP defines a protocol and management elements, suitable for advertising information to stations attached to the same IEEE 802 LAN and for learning information of stations attached to the same IEEE 802 LAN.

The advertised and learned information is stored in "Management Information Bases" (so called MIB). MIB information could be read out by Simple Network Management Protocol (SNMP) if supported.

LLDP typically sends out a Media Access Control (MAC) service data unit (MSDU) with a Link Layer Discovery Protocol data unit (LLDPDU) encapsulated e.g. every 30 seconds. This value is called message transmit interval (msgTxlnterval).

LLDP typically holds information for 120 seconds, however this depends on the Time To Live (TTL) which is mandatory included in the LLDPDU and typically equals four times the msgTxInterval, this value is called message transmit hold (msgTxHold) . Only after the TTL for received information is elapsed the information is aged and removed from the particular MIB.

LLDP defines different MIBs. The LLDP local system MIB includes the information needed to construct the LLDPDU messages that will be sent. The LLDP remote systems MIB ("remote MIB") stores information of each remote system that is detected. The LLDP remote systems MIB includes information from which local port the remote system information is received.

In a conventional network, once the physical network is being adapted - i.e. a physical state of at least one network link changes - the remote system MIBs of the devices for which the network has been changed will still report 'incorrect' data for a time that is the product of msgTxHold * msgTxInterval, and typically equals 120 seconds. Working - i.e. running the network - with this incorrect data will lead to incorrect conclusions and will confuse users of the data.

According to the invention, to make sure the change is propagated within seconds the physical port information is used. In case the physical port is changed, the remote systems MIB is, especially immediately, updated to make sure no aged information remains in the system any longer. Hence, a user querying such information does not get aged information. If for example the physical port is removed, all links associated with this port change their physical state to "down". Then in the MIBs of the network all information about the remote systems, learned via the ports associated to the changed link should be removed. If a port is changed to "up" state, the associated links and all ports of these links go to "up" state. It is then allowed again to fill the remote systems MIB associated to the respective ports with information coming in on that ports. This is default behavior.

With clearing the respective information from the MIB according to the invention it is possible to detect physical failures which were not possible to be detected before, for example a flapping interface. In a conventional network a flapping interface would not be detected on basis of the LLDP information, as long as a Link Layer Discovery Protocol data unit (LLDPDU) is sent out and received in regular intervals, that have a duration of the product of the message transmit hold time (msgTxHold) * the message transmit interval (msgTxInterval), which product is typically 120 seconds. With this addition according to the invention every physical link state change will be observed, since the LLDP will send out a LLDPDU once the link state changes, especially the link enters the "up" state, which will refresh the data which was cleared when the link entered the "down" state.

If no direct access to the remote MIBs is available, the functionality can be implemented by the user of the data. Via a Simple Network Management Protocol the port states can be queried, and logic can be implemented such that the remote system management information base can be trusted upon the state of the network link on which the information is received.

With this addition according to the invention it is possible to have a real-time overview of the physical network topology which - in conventional networks - would typically lag some time behind, namely a timespan of the product of msgTxHold * msgTxInterval, which is typically 120 seconds. The addition is very useful when changing the network topology and immediately checking the result.

In a preferred embodiment each information in the remote MIB comprises a time to live (TTL). The remote MIB information is updated though the TTL associated with the respective information has not yet expired. This avoids invalid information to be kept until the end of its associated TTL, but being replaced as soon as it becomes invalid.

In a preferred embodiment the remote MIB information is updated at least in respect of information related to the ports associated with the changed link. This ensures that at least the remote MIBs that contain information about objects associated with the changed link are updated. Only this information is probably invalid and should be updated after the link state change. The remaining remote MIB information in the network should still be valid and does not need to be updated.

In a preferred embodiment, after a link state of a link changes from "up" to "down", for the ports associated with this link, all remote MIB information learned via the ports of the changed link are removed, especially immediately after the change of the physical state. This ensures that no information about ports, which might no longer be valid, will remain in the remote MIBs.

In a preferred embodiment, after a link state of a link changes from "down" to "up", from the ports associated with this link an LLDPU that is updated in respect of this link is sent out, especially immediately after the change of the physical state. This ensures that - especially immediately - after a network link has been established, information about this link and its associated ports is stored in the remote MIBs. Any query of the MIBs, e.g. to identify the physical network layout, at once renders information about or reflects the actual situation.

In a preferred embodiment, after an update of the remote MIB information, a receiver is notified of the update, especially immediately after the update. The receiver is e.g. a user of the network system or a device or program that is related or depends on the physical network layout. The receiver is hence informed about the change and may at once retrieve information from the MIBs to be informed about the actual (changed) physical network layout. For example a user may view and hence may immediately be informed about physical network layout.

According to the invention, a Computer network according to claim 7 comprises a number of devices, wherein each of the devices comprises at least one network port, wherein the devices are interconnected within the network by network links, each link connecting two respective ports, wherein each of the network ports is running the LLDP protocol and comprises a remote MIB, wherein the computer network is adapted for performing the method according to the invention.

### Brief description of the drawings

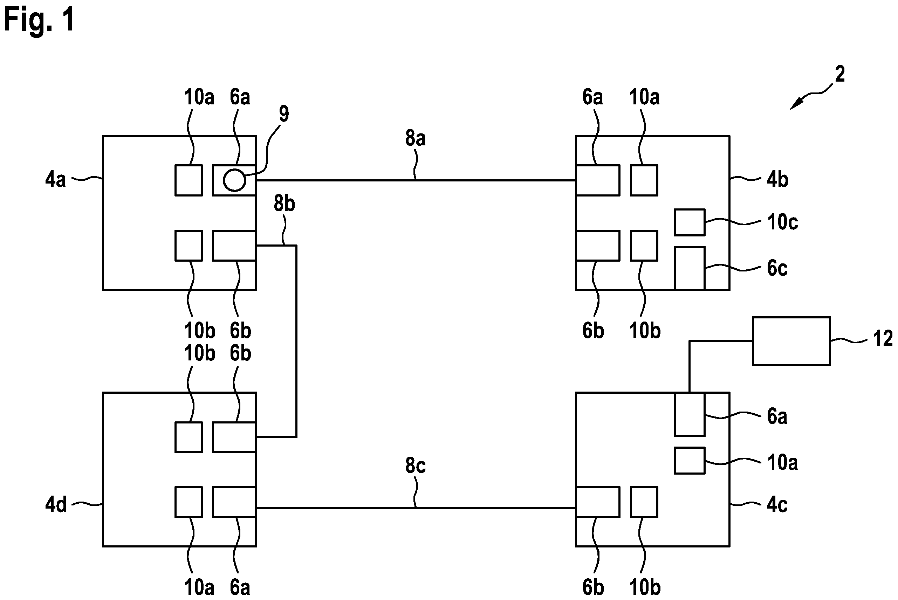

- Figure 1: a computer network

It will be understood that the features mentioned above and those described hereinafter can be used not only in the combination specified but also in other combinations or on their own, without departing from the scope of the invention. The invention is diagrammatically illustrated in the drawings by means of embodiments by way of example, and is hereinafter explained in detail with reference to the drawings. It is understood that the description is in no way limiting on the scope of the present invention and is nearly an illustration of embodiments of the invention.

### Description of embodiments

Figure 1 shows a computer network 2. The network 2 comprises devices 4a-d. The devices 4a-d comprise network ports 6a-c. The devices 4a-d are interconnected within the network 2 by network links 8a-c. Each of the links 8a-c connects two of the ports 6a-c.

Each network port 6a-c is running a LLDP protocol 9, exemplarily shown for port 6a of device 4a, and comprises a remote MIB 10a-c.

The network links 8a-c can take different physical states "up" or "down".

Each time, a network link 8a-c changes its physical state, the information in the remote MIBS 10a-c of the ports 6a-c are updated.

Once an update of the information in the MIBs 10a-c has taken place, a receiver 12, also connected to the network via port 6a of device 4c, is informed by the network 2. The receiver 12 is viewed or operated by a user. The user can then retrieve information from the MIBs 10a-c to be informed about the actual - especially changed - physical layout of the network 2.

## Claims

1. Method for running a computer network (2), the computer network (2) comprising a number of devices (4a-d), wherein each of the devices (4a-d) comprises at least one network port (6a-c), wherein the devices (4a-d) are interconnected within the network (2) by network links (8a-c), each link (8a-c) connecting two respective ports (6a-c), wherein each of the network ports (6a-c) is running the Link Layer Discovery Protocol LLDP protocol (9) and comprises a LLDP remote systems Management Information Base, MIB (10a-c), the LLDP remote systems MIB including information from which local port the remote system information is received, **characterized in that** in each of devices (4a-d) after a link state of a link (8a-c) changes from "up" to "down", for the ports (6a-c) associated with this link (8a-c) all information in the remote MIB (10a-c) learned via the ports(6a-c) of the changed link (8a-c) are removed to make sure the change is propagated within seconds in the device.

2. Method according to claim 1, whereby each information in the remote MIB (10a-c) comprises a TTL, wherein the information in the remote MIB (10a-c) is updated though the TTL associated with the respective information has not yet expired.

3. Method according to one of the preceding claims, wherein after a link state of a link (8a-c) changes from "down" to "up", from the ports (6a-c) associated with this link (8a-c) an LLDP that is updated in respect of this link (8a-c) is sent out, especially immediately after the change of the physical state.

4. Method according to one of the preceding claims, wherein after an update of the information in the remote MIB (10a-c), a receiver (12) is notified of the update, especially immediately after the update.

5. Computer network (2) comprising a number of devices (4a-d), wherein each of the devices (4a-d) comprises at least one network port (6a-c), wherein the devices (4a-d) are interconnected within the network (2) by network links (8a-c), each link (8a-c) connecting two respective ports (6a-c), wherein each of the network ports (6a-c) is running the Link Layer Discovery Protocol LLDP protocol (9) and comprises a LLDP remote systems Management Information Base, MIB (10a-c), the LLDP remote systems MIB including information from which local port the remote system information is received wherein each of the devices (4a-d) is adapted for performing a method according to one of claims 1 to 4.

## Patentansprüche

1. Verfahren zum Betreiben eines Computernetzwerks (2), wobei das Computernetzwerk (2) eine Anzahl von Geräten (4a-d) umfasst,
wobei jedes der Geräte (4a-d) mindestens einen Netzwerkanschluss (6a-c) aufweist,
wobei die Geräte (4a-d) innerhalb des Netzwerks (2) durch Netzwerkverbindungen (8a-c) miteinander verbunden sind und jede Verbindung (8a-c) zwei entsprechende Anschlüsse (6a-c) verbindet,
wobei jeder der Netzwerkanschlüsse (6a-c) das Link Layer Discovery Protocol (LLDP-Protokoll) (9) ausführt und eine Management Information Base (MIB) (10a-c) für LLDP-Remote-Systeme umfasst, wobei die LLDP-Remote-Systeme-MIB Informationen darüber enthält, von welchem lokalen Anschluss die Remote-System-Informationen empfangen werden,
**dadurch gekennzeichnet, dass**
in jedem der Geräte (4a-d), nachdem ein Verbindungszustand einer Verbindung (8a-c) sich von "oben" nach "unten" geändert hat, für die mit dieser Verbindung (8a-c) verknüpften Anschlüsse (6a-c) alle Informationen in der Remote-MIB (10a-c), die über die Anschlüsse (6a-c) der geänderten Verbindung (8a-c) gelernt wurden, entfernt werden, um sicherzustellen, dass die Änderung innerhalb von Sekunden in dem Gerät propagiert wird.

2. Verfahren gemäß Anspruch 1,
wodurch jede Information in der Remote-MIB (10a-c) eine TTL aufweist,
wobei die Information in der Remote-MIB (10a-c) aktualisiert wird, obwohl die mit der entsprechenden Information verknüpfte TTL noch nicht abgelaufen ist.

3. Verfahren gemäß einem der vorhergehenden Ansprüche, wobei, nachdem ein Verbindungszustand einer Verbindung (8a-c) sich von "oben" nach "unten" geändert hat, von den mit dieser Verbindung (8a-c) verknüpften Anschlüssen (6a-c) ein LLDP, das in Bezug auf diese Verbindung (8a-c) aktualisiert wird, ausgesendet wird, insbesondere unmittelbar nach der Änderung des physikalischen Zustands.

4. Verfahren gemäß einem der vorhergehenden Ansprüche, wobei, nach einer Aktualisierung der Informationen in der Remote-MIB (10a-c), ein Empfänger (12) von der Aktualisierung benachrichtigt wird, insbesondere unmittelbar nach der Aktualisierung.

5. Computernetzwerk (2), das eine Anzahl von Geräten (4a-d) umfasst,
wobei jedes der Geräte (4a-d) mindestens einen Netzwerkanschluss (6a-c) aufweist,
wobei die Geräte (4a-d) innerhalb des Netzwerks (2) durch Netzwerkverbindungen (8a-c) miteinander verbunden sind und jede Verbindung (8a-c) zwei entsprechende Anschlüsse (6a-c) verbindet,
wobei jeder der Netzwerkanschlüsse (6a-c) das Link Layer Discovery Protocol (LLDP-Protokoll) (9) ausführt und eine Management Information Base (MIB) (10a-c) für LLDP-Remote-Systeme umfasst, wobei die LLDP-Remote-Systeme-MIB Informationen darüber enthält, von welchem lokalen Anschluss die Remote-System-Informationen empfangen werden,
wobei jedes der Geräte (4a-d) dazu ausgelegt ist, ein Verfahren gemäß einem der Ansprüche 1 bis 4 durchzuführen.

## Revendications

1. Procédé pour faire fonctionner un réseau informatique (2), le réseau informatique (2) comprenant un certain nombre de dispositifs (4a-d), où chacun des dispositifs (4a-d) comprend au moins un port de réseau (6a-c), où les dispositifs (4a-d) sont interconnectés au sein du réseau (2) par des liaisons de réseau (8a-c), chaque liaison (8a-c) connectant deux ports respectifs (6a-c), où chacun des ports de réseau (6a-c) exécute le protocole de découverte de la couche de liaison LLDP (9) et comprend une base d'informations de gestion, MIB, des systèmes distants LLDP (10a-c), la MIB des systèmes distants LLDP comprenant des informations sur le port local duquel les informations du système distant sont reçues, le procédé étant **caractérisé en ce que** dans chacun des dispositifs (4ad), après qu'un état de liaison d'une liaison (8a-c) a changé de « haut » à « bas », pour les ports (6a-c) associés à cette liaison (8a-c), toutes les informations de la MIB distante (10a-c) apprises par l'intermédiaire des ports (6a-c) de la liaison modifiée (8a-c) sont supprimées pour s'assurer que le changement se propage en quelques secondes dans le dispositif.

2. Procédé selon la revendication 1, selon lequel chaque information dans la MIB distante (10a-c) comprend un TTL, où les informations dans la MIB distante (10a-c) sont mises à jour bien que le TTL associé aux informations respectives n'ait pas encore expiré.

3. Procédé selon l'une des revendications précédentes, dans lequel, après qu'un état de liaison d'une liaison (8a-c) a changé de « bas » à « haut », à partir des ports (6a-c) associés à cette liaison (8a-c), un LLDP qui est mis à jour relativement à cette liaison (8a-c) est envoyé, en particulier immédiatement après le changement de l'état physique.

4. Procédé selon l'une des revendications précédentes, dans lequel après une mise à jour des informations dans la MIB distante (10a-c), un récepteur (12) est informé de la mise à jour, en particulier immédiatement après la mise à jour.

5. Réseau informatique (2) comprenant un certain nombre de dispositifs (4a-d), où chacun des dispositifs (4a-d) comprend au moins un port de réseau (6a-c), où les dispositifs (4a-d) sont interconnectés au sein du réseau (2) par des liaisons de réseau (8a-c), chaque liaison (8a-c) connectant deux ports respectifs (6a-c), où chacun des ports de réseau (6a-c) exécute le protocole de découverte de la couche de liaison LLDP (9) et comprend une base d'informations de gestion, MIB, des systèmes distants LLDP (10a-c), la MIB des systèmes distants LLDP comprenant des informations sur le port local duquel les informations du système distant sont reçues, où chacun des dispositifs (4a-d) est adapté pour exécuter un procédé selon l'une des revendications 1 à 4.
